# EUROPEAN PATENT APPLICATION

(11) **EP 3 889 800 A2**
(43) Date of publication of application: **06.10.2021**
(21) Application number: 21188540.5
(22) Date of filing: 29.07.2021
(51) Int. Cl.: G06F 16/33, G06F 16/957

(54) **INFORMATION SEARCH METHOD AND APPARATUS**

(30) Priority: 15.12.2020 CN 202011480940
(71) Applicant: BAIDU ONLINE NETWORK TECHNOLOGY (BEIJING) CO., LTD., Beijing 100085 (CN)
(72) Inventor: CAO, Jiannan, BEIJING, 100085 (CN); CAO, Bin, BEIJING, 100085 (CN)
(74) Representative: von Tietzen und Hennig, Nikolaus

(57) **Abstract**

An information search method and apparatus are provided. The information search method includes: receiving a request message including query information from a client; determining, based on the request message, a suggested word result and a prefetched search result corresponding to the query information; returning the suggested word result as a first response message for the request message to the client; and returning the prefetched search result as a second response message for the request message to the client.

## Description

### TECHNICAL FIELD

Embodiments of the present disclosure mainly relate to the Internet field, and more specifically, to an information search method and apparatus, an electronic device, a computer-readable storage medium, and a computer program product.

### BACKGROUND

When a user performs an information search with a client, and the client often needs to present two parts of information to the user: one is a suggested word associated with a search word entered by the user, and the other is a search result acquired by a search engine of a server. Therefore, the client needs to separately send, based on the search word entered by the user, a request to a suggested word service function entity for determining a suggested word and a prefetch service function entity for prefetching a search result in a server system, and present, to the user as quickly as possible, a suggested word acquired from the suggested word service function entity and present a prefetched search result to the user when the user sends a search instruction. If the user changes the search word, the client still needs to send a request twice as described above. In other words, each time the user enters a search word, a request needs to be sent twice, and a response also needs to be received twice. Therefore, a conventional information search manner wastes computing resources and network bandwidth of the client.

### SUMMARY

According to exemplary embodiments of the present disclosure, a solution of searching for information is provided.

In a first aspect of the present disclosure, an information search method is provided. The method including receiving, from a client, a request message including query information. The method further includes determining, based on the request message, a suggested word result and a prefetched search result corresponding to the query information. Further, the method includes returning the suggested word result as a first response message for the request message to a client. In addition, the method further includes returning the prefetched search result as a second response message for the request message to the client.

In a second aspect of the present disclosure, an information search method is provided. The method includes sending a request message to a server system based on query information entered by a user, wherein the request message includes the query information. In addition, the method further includes receiving, from at least one service function entity in the server system, a first response message and a second response message for the request message. The first response message indicates a suggested word result corresponding to the query information and to be presented to the user, and the second response message indicates a prefetched search result corresponding to the query information and to be presented to the user.

In a third aspect of the present disclosure, an information search apparatus is provided, which includes: a request message receiving module configured to receive, from a client, a request message including query information; a result determination module configured to determine, based on the request message, a suggested word result and a prefetched search result corresponding to the query information; a first response message sending module configured to return the suggested word result as a first response message for the request message to the client; and a second response message sending module configured to return the prefetched search result as a second response message for the request message to the client.

In a fourth aspect of the present disclosure, an information search apparatus is provided, which includes: a request message sending module configured to send a request message to a server system based on query information entered by a user, wherein the request message includes the query information; and a response message receiving module configured to receive, from at least one service function entity in the server system, a first response message and a second response message for the request message, wherein the first response message indicates a suggested word result corresponding to the query information and to be presented to the user, and wherein the second response message indicates a prefetched search result corresponding to the query information and to be presented to the user.

In a fifth aspect of the present disclosure, a computer program product including instructions is provided, which, when the program is executed by a computer, causes the computer to carry out the methods according to the first aspect and the second aspect of the present disclosure.

In a sixth aspect of the present disclosure, a computer-readable storage medium including instructions, which, when executed by a computer, cause the computer to carry out the method according to the first aspect of the present disclosure is implemented.

In a seventh aspect of the present disclosure, an electronic device is provided, which includes one or more processors; and a storage apparatus configured to store one or more programs that, when executed by the one or more processors, cause the one or more processors to implement the method according to the first aspect of the present disclosure.

It should be understood that the content described in the summary is not intended to limit critical or significant features of the embodiments of the present disclosure, nor is it intended to limit the scope of the present disclosure. Other features of the present disclosure will be easily comprehensible from the following description.

### BRIEF DESCRIPTION OF THE DRAWINGS

The above and other features, advantages, and aspects of various embodiments of the present disclosure will be described in conjunction with the drawings and with reference to the following detailed description. In the accompanying drawings, the same or similar reference signs denote the same or similar elements. In the figures:
Fig. 1 is a schematic diagram of an exemplary environment in which a plurality of embodiments of the present disclosure can be implemented;
Fig. 2 is a high-level pipeline diagram of a process for searching for information according to an example of the present disclosure;
Fig. 3 is a flowchart of a process for searching for information based on a server system side according to an example of the present disclosure;
Fig. 4 is another high-level pipeline diagram of the process for searching for information according to an example of the present disclosure;
Fig. 5 is still another high-level pipeline diagram of the process for searching for information according to an example of the present disclosure;
Fig. 6 is a flowchart of a process for searching for information based on a client side according to an example of the present disclosure;
Fig. 7 is a block diagram of an apparatus for searching for information based on a server system side according to an example of the present disclosure;
Fig. 8 is a block diagram of an apparatus for searching for information based on a client side according to an example of the present disclosure; and
Fig. 9 is a block diagram of a computing device that can implement a plurality of examples of the present disclosure.

### DETAILED DESCRIPTION

One or more examples of the present disclosure will be described in more detail below with reference to the accompanying drawings. Although some examples of the present disclosure are shown in the accompanying drawings, it should be understood that the present disclosure can be implemented in various forms and should not be construed as being limited to the examples set forth herein. On the contrary, these examples are provided for a more thorough and complete understanding of the present disclosure. It should be understood that the accompanying drawings and the examples of the present disclosure are merely for illustrative purposes, and are not intended to limit the scope of protection of the present disclosure.

In the description of the examples of the present disclosure, the term "include" and similar terms should be understood as non-exclusive inclusion, that is, "including but not limited to". The term "based on" should be understood as "at least partially based on". The terms "an example" or "the example" should be understood as "at least one example". The terms "first", "second", and the like may refer to different or same objects. Other explicit and implicit definitions may also be included below.

As described above, in the conventional information search manner, request sending and response receiving each need to be performed twice in response to each input by the user for a search, such that computing resources of a user device of a client are occupied, and overheads of network bandwidth are increased. For example, if the user wants to enter query information "bei jing tian qi" (which means Beijing weather), the user may enter "bei jing", "tian", and "qi" one by one in the entering process. When the user enters "bei jing", the client encapsulates the query information "bei jing" into a suggested word request message and send the message to a suggested word service function entity on a server system side, and the client further encapsulates the query information "bei jing" into a prefetch service request message and sends the message to a prefetch service function entity on the server system side. Then, the client presents, to the user, suggested word results related to "bei jing" based on a response message. In addition, the client may further store prefetched search results related to "bei jing". Before the user sends a search instruction, each time the user adds or changes the query information, the client sends a request message twice and receives a response message corresponding to the request twice. Therefore, there is still room for optimization of the search process.

As mentioned above, there is an urgent need for an information search method to quickly, efficiently, and cost-effectively complete the process of presenting suggested words and prefetching search results for query information entered by a user.

According to an example of the present disclosure, an information search solution is proposed. In this solution, a transfer function entity may be disposed in a server to receive a request message from a client, and then the transfer function entity asks a corresponding service function entity for a suggested word result and a prefetched search result based on the request message, and returns the two results to the client in the form of a response message corresponding to the request message. For example, a suggested word service function entity located in the server may generate a suggested word response message in response to receiving a suggested word request message generated by the client, and return the response message to the client based on chunked transfer encoding of HyperText Transfer Protocol (HTTP). In addition, the suggested word service function entity further sends a prefetch service request message to a prefetch service function entity based on the suggested word request message, and after a prefetch service response message returned by the prefetch service function entity is received, the suggested word service function entity returns a prefetched search result to the client based on chunked transfer encoding of HyperText Transfer Protocol.

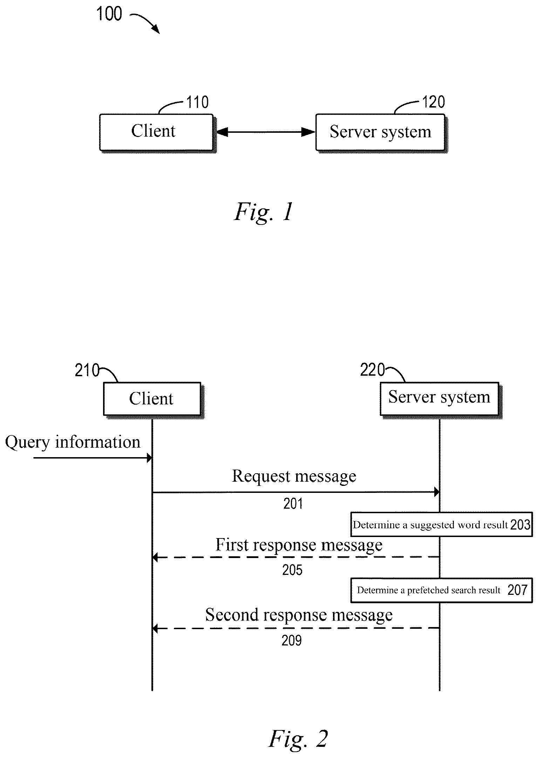

The one or more examples of the present disclosure are specifically described with reference to the accompanying drawings. Fig. 1 is a schematic diagram of an exemplary environment 100 in which a plurality of examples of the present disclosure can be implemented. As shown in Fig. 1, the exemplary environment 100 includes a client 110 and a server system 120. In some examples, the client 110 may include, but is not limited to, a personal computer, a server computer, a handheld or laptop device, a mobile device (such as a mobile phone, a personal digital assistant (PDA), a media player, etc.), a multi-processor system, consumer electronics, a minicomputer, a mainframe computer, a distributed computing environment including any of the foregoing systems or devices, etc. In addition, the server system 120 may be conventionally arranged, and may also be located in the cloud, and perform a response operation based on a request message from the client 110.

In order to describe a message transfer process of Fig. 1 in more detail, message transfer between the client and the server system will now be described in detail with reference to Fig. 2. Fig. 2 is a high-level pipeline diagram of a process for searching for information according to an example of the present disclosure. As shown in Fig. 2, after receiving query information (that is, a query) that is entered by a user, a client 210 may generate a request message including the query information, and sends the request message to a server system 220 at 201. Then at 203, the server system 220 may determine, based on the request message, a suggested word result associated with the query information. At 205, the server system 220 may return the suggested word result as a first response message to the client 210. In addition, at 207, the server system 220 may further determine, based on the request message, a prefetched search result associated with the query information, and at 209, the server system 220 may return the prefetched search result as a second response message to the client 210.

It should be understood that the process 203 of determining a suggested word result and the process 207 of determining a prefetched search result by the server system 220 are not limited to being performed in the sequence shown in Fig. 2. In other words, in addition to be performed sequentially as shown in Fig. 2, the process 203 and the process 207 may be performed in parallel. In addition, the process 205 of returning the first response message may be performed immediately after the suggested word result is determined, and the process 209 of returning the second response message may be performed immediately after the prefetched search result is determined. In this way, the client 210 can present the suggested word result to the user, and present the prefetched search result to the user based on an instruction of the user.

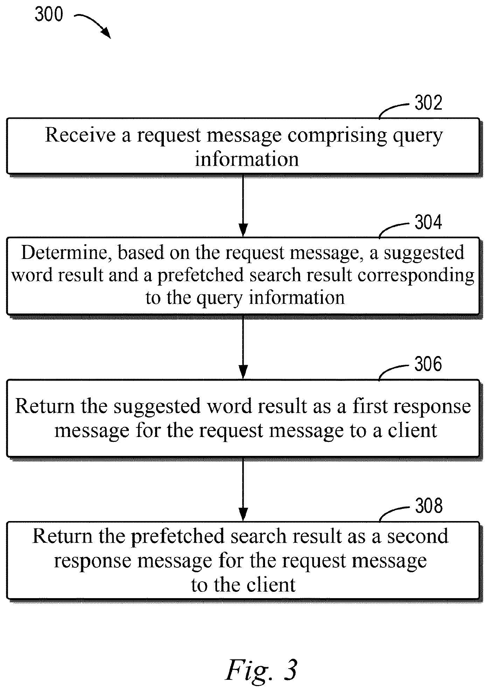

The technical solution described above is only for illustration, and does not limit the present disclosure. It should be understood that the client 210 and the server system 220 may also be arranged in other manners and connection relationships. In order to explain the principle of the foregoing solution more clearly, the information search process will be described in more detail below with reference to Fig. 3.

Fig. 3 is a flowchart of a process 300 for searching for information based on a server system side according to an example of the present disclosure. In some examples, the process 300 may be implemented in the server system 120 in Fig. 1 and the server system 220 in Fig. 2. The information search process 300 according to an example of the present disclosure now will be described with reference to Fig. 3. For ease of understanding, the specific instances mentioned in the following description are all exemplary and are not used to limit the protection scope of the present disclosure.

At 302, the server system 220 may receive a request message from the client 210. It should be understood that, the request message includes query information. Here, the request message is not a "search request message" in a conventional technical solution, because the request message is not triggered by a search action of the user, but may be triggered by an action of entering the query information by the user. It should further be understood that the query information may be at least part of a query item entered by the user. As an example, when the user wants to search for information about "bei jing tian qi", if the user first enters "bei jing" in a search box, "bei jing" is the query information. When the user subsequently enters "tian", the query item "bei jing tian" is the query information. The client 210 is configured to present a suggested word result such as "bei jing tian qi" and "bei jing ti yu" (which means Beijing sports) to the user based on the query information entered by the user in real time. In addition, the client 210 is further configured to acquire a prefetched search result from the server system 220 based on the query information entered by the user in real time, so that when the user triggers a search instruction or the user selects one suggested word result from a plurality of presented suggested word results for a search, the client 210 may present the prefetched search result to the user.

At 304, the server system 220 may determine, based on the request message, a suggested word result and a prefetched search result corresponding to the query information.

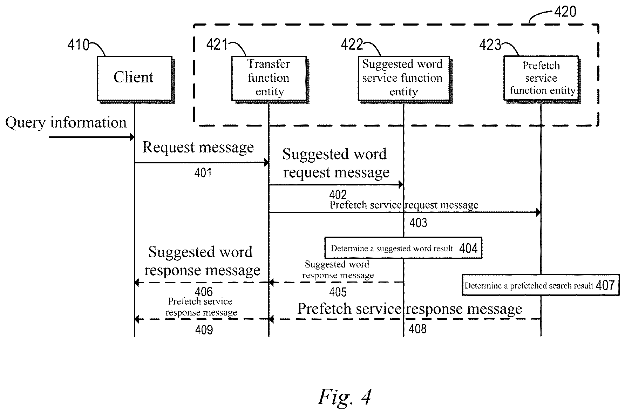

In some examples, to determine the suggested word result and the prefetched search result, the server system 220 may generate, based on the request message, a suggested word request message and a prefetch service request message associated with the query information. It should be understood that the server system 220 may include a plurality of function entities. As an example, Fig. 4 is another high-level pipeline diagram of the process for searching for information according to the foregoing example of the present disclosure. In Fig. 4, a server system 420 may include a transfer function entity 421, a suggested word service function entity 422, and a prefetch service function entity 423. Therefore, at 401, the transfer function entity 421 in the server system 420 may be configured to receive a request message including query information from a client 410, and generate a suggested word request message and a prefetch service request message corresponding to the query information.

Then, the transfer function entity 421 respectively sends the suggested word request message and the prefetch service request message to the suggested word service function entity 422 and the prefetch service function entity 423 in the server system 420. As an example, at 402, the transfer function entity 421 sends the suggested word request message to the suggested word service function entity 422. After this or at the same time, at 403, the transfer function entity 421 sends the prefetch service request message to the prefetch service function entity 423.

In addition, the transfer function entity 421 is further configured to receive a suggested word response message from the suggested word service function entity 422 and a prefetch service response message from the prefetch service function entity 423. As an example, at 404, the suggested word service function entity 422 determines a suggested word result based on the suggested word request message, and at 405, the suggested word service function entity 422 transfers the suggested word result to the transfer function entity 421 as the suggested word response message. After the process 404 or at the same time, at 407, the prefetch service function entity 423 determines a prefetched search result based on the prefetch service request message, and at 408, the prefetch service function entity 423 transfers the prefetched search result to the transfer function entity 421 as the prefetch service response message. In this way, by arranging the transfer function entity 421 in the server system 420, in the present disclosure, the client can receive the two results determined by the server system 420 after sending a request message once, thereby reducing the bandwidth overheads on the client side.

It should be understood that the suggested word response message includes the suggested word result corresponding to the query information, and the prefetch service response message includes the prefetched search result corresponding to the query information. It should also be understood that the foregoing processes are not limited to being performed in the sequence shown in Fig. 4. In other words, in addition to the sequential execution shown in Fig. 4, the foregoing processes may be performed in another sequence, for example, the processes 402 and 403 are performed in parallel, the processes 404 and 407 are performed in parallel, the processes 405 and 408 are performed in parallel, and so on.

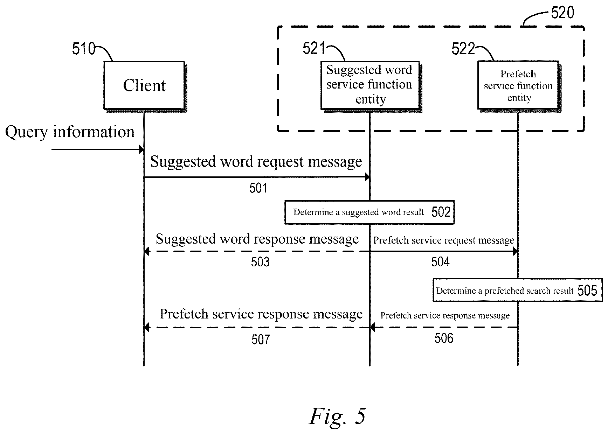

In addition, in some examples, the request message may include a suggested word request message, and therefore, the suggested word service function entity may partially take the place of the foregoing transfer function entity. As an example, Fig. 5 is still another high-level pipeline diagram of the process for searching for information according to the foregoing example of the present disclosure. In Fig. 5, a server system 520 may include a suggested word service function entity 521 and a prefetch service function entity 522. Therefore, at 501, the suggested word service function entity 521 in the server system 520 may be configured to receive a suggested word request message including query information from a client 510. Then at 502, the suggested word service function entity 521 determines a suggested word result based on the suggested word request message.

In addition, a prefetch service request message may be further generated based on the suggested word request message, and a prefetch service response message is generated based on the prefetch service request message, wherein the prefetch service response message includes a prefetched search result corresponding to the query information. As an example, at 504, the suggested word service function entity 521 sends a prefetch service request message to the prefetch service function entity 522, and at 505, the prefetch service function entity 522 determines a prefetched search result, and then at 506, returns the prefetched search result to the suggested word service function entity 521 as a prefetch service response message. In this way, by setting the suggested word service function entity in the server system 520 as a transfer function entity, in the present disclosure, the client can receive the two results determined by the server system 520 after sending a request message once, thereby reducing the bandwidth overheads on the client side.

At 306, the server system 220 may return the suggested word result as a first response message for the request message to the client 210. As an example, as shown in Fig. 4, at 406, the transfer function entity 421 returns the suggested word result to the client 410 as a suggested word response message. As another example, as shown in Fig. 5, at 503, the suggested word service function entity 521 returns the suggested word result to the client 510 as a suggested word response message.

At 308, the server system 220 may return the prefetched search result as a second response message for the request message to the client 210. As an example, as shown in Fig. 4, at 409, the transfer function entity 421 returns the prefetched search result to the client 410 as a prefetch service response message. As another example, as shown in Fig. 5, at 507, the suggested word service function entity 521 returns the prefetched search result to the client 510 as a prefetch service response message.

In some examples, the first response message and the second response message for the request message are transferred sequentially based on chunked transfer encoding of HyperText Transfer Protocol. In other words, there may be one response message for the request message, the first response message includes start information of the response message for the request message, and the second response message includes end information of the response message. Therefore, the client 210 can acquire the suggested word result and prefetched search result by receiving one response message, thereby saving bandwidth resources on the client side.

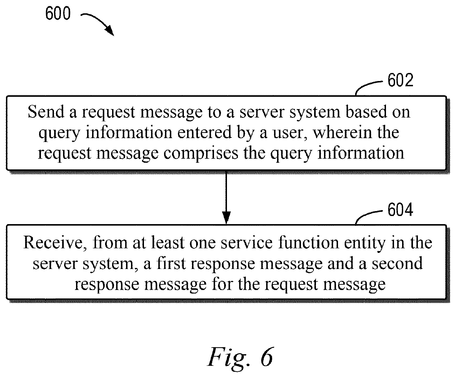

Fig. 6 is further a flowchart of a process 600 for searching for information based on a client side according to an example of the present disclosure. In some examples, the process 600 may be implemented in the client 110 in Fig. 1 and the client 210 in Fig. 2. The information search process 600 according to an example of the present disclosure now will be described with reference to Fig. 6. For ease of understanding, the specific instances mentioned in the following description are all exemplary and are not used to limit the protection scope of the present disclosure.

At 602, the client 210 may send a request message to a server system based on query information entered by a user. It should be understood that, the request message includes query information. Here, the request message is not a "search request message" in a conventional technical solution, because the request message is not triggered by a search action of the user, but may be triggered by an action of entering the query information by the user. As an example, when the user wants to search for information about "bei jing tian qi", if the user first enters "bei jing" in a search box, "bei jing" is the query information. When the user subsequently enters "tian", the query item "bei jing tian" is the query information.

At 604, the client 210 may receive, from at least one service function entity in the server system 220, a first response message and a second response message for the request message. As an example, the first response message may be used to indicate a suggested word result corresponding to the query information and to be presented to the user, and the second response message may be used to indicate a prefetched search result corresponding to the query information and to be presented to the user. As an example, the client 210 may present a suggested word result such as "bei jing tian qi" and "bei jing ti yu" to the user based on the query information entered by the user in real time. In addition, the client 210 is further configured to acquire a prefetched search result from the server system 220 based on the query information entered by the user in real time, so that when the user triggers a search instruction or the user selects one suggested word result from a plurality of presented suggested word results for a search, the client 210 may present the prefetched search result to the user.

In some examples, the at least one service function entity may be a suggested word service function entity or a prefetch service function entity for providing a suggested word service function or a prefetch service function. Alternatively or additionally, the at least one service function entity may alternatively be a transfer service function entity for providing a forwarding service function. In some examples, the first response message and the second response message for the request message are transferred sequentially based on chunked transfer encoding of HyperText Transfer Protocol.

It should be understood that the request message may include addressing information for addressing the at least one service function entity in the server system 220. For example, the request message may include address information destined to the suggested word service function entity, so that when receiving the request message, the transfer function entity may directly forward the request message to the suggested word service function entity based on the address information. For another example, the request message may include address information destined to the prefetch service function entity, so that when receiving the request message, the transfer function entity may directly forward the request message to the prefetch service function entity based on the address information. In this way, a working mechanism of the transfer function entity can be defined on the client side, so that when the server system 220 includes function entities other than the suggested word service function entity and the prefetch service function entity, the client 210 can determine by itself a destination function entity to which the request message is sent. In this way, the scalability of a server-side function entity is improved.

In some examples, when the client 210 receives a search instruction entered by the user, for example, the user touches the "search" instruction, or the user selects one of suggested word results, the client 210 needs to compare the prefetched search result with the query information. The prefetched search result is presented to the user if the prefetched search result hits the query information. If the prefetched search result does not hit the query information, the client 210 directly re-initiates a search request based on the query information. In this way, the accuracy of the search result and the user experience can be improved.

Through the above examples, the present disclosure provides an improved flow of message communication between the client and the server system in the information search process. Through the execution of the improved flow of the present disclosure, the number of times a client sends a request can be reduced, thereby greatly reducing system and bandwidth overheads of the client in a process of entering query information by a user. In addition, the present disclosure uses the chunked transfer encoding of hypertext transfer protocol (HTTP) to transfer, in one response message, the two results determined on the server system side, thereby reducing the number of times the client receives a response and further reducing the system and bandwidth overheads of the client.

In addition, the present disclosure further provides a corresponding computer-readable storage medium, which stores computer instructions that are used to cause a computer to perform at least one process of the foregoing examples. The present disclosure further provides a corresponding computer program product, which includes a computer program that can implement at least one process of the foregoing examples.

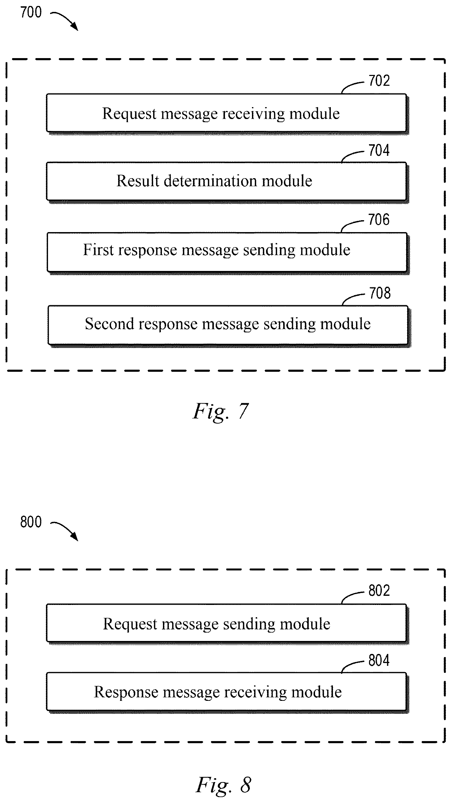

Fig. 7 is a block diagram of an apparatus 700 for searching for information based on a server system side according to an example of the present disclosure. As shown in Fig. 7, the apparatus 700 may include: a request message receiving module 702 configured to receive, from a client, a request message including query information; a result determination module 704 configured to determine, based on the request message, a suggested word result and a prefetched search result corresponding to the query information; a first response message sending module 706 configured to return the suggested word result as a first response message for the request message to the client; and a second response message sending module 708 configured to return the prefetched search result as a second response message for the request message to the client.

In some examples, the result determination module 704 may be further configured to: generate, based on the request message, a suggested word request message and a prefetch service request message associated with the query information; respectively send the suggested word request message and the prefetch service request message to a suggested word service function entity and a prefetch service function entity in a server system; and receive a suggested word response message from the suggested word service function entity and a prefetch service response message from the prefetch service function entity, wherein the suggested word response message includes the suggested word result corresponding to the query information, and the prefetch service response message includes the prefetched search result corresponding to the query information.

In some examples, the request message may include a suggested word request message, and the result determination module may be further configured to: generate a suggested word response message based on the suggested word request message, wherein the suggested word response message includes the suggested word result corresponding to the query information; generate a prefetch service request message based on the suggested word request message; and generate a prefetch service response message based on the prefetch service request message, wherein the prefetch service response message includes the prefetched search result corresponding to the query information.

In some examples, the first response message and the second response message for the request message may be transferred sequentially based on chunked transfer encoding of HyperText Transfer Protocol.

Fig. 8 is a block diagram of an apparatus 800 for searching for information based on a client side according to an example of the present disclosure. As shown in Fig. 8, the apparatus 800 may include: a request message sending module 802 configured to send a request message to a server system based on query information entered by a user, wherein the request message includes the query information; and a response message receiving module 804 configured to receive, from at least one service function entity in the server system, a first response message and a second response message for the request message, wherein the first response message indicates a suggested word result corresponding to the query information and to be presented to the user, and wherein the second response message indicates a prefetched search result corresponding to the query information and to be presented to the user.

In some examples, the at least one service function entity may be configured to provide a suggested word service function or a prefetch service function.

In some examples, the at least one service function entity may be configured to provide a forwarding service function.

In some examples, the request message may include addressing information for addressing the at least one service function entity in the server system.

In some examples, the first response message and the second response message for the request message are transferred sequentially based on chunked transfer encoding of HyperText Transfer Protocol.

In some examples, the apparatus may further include: a comparison module configured to compare the prefetched search result with the query information in response to receiving a search instruction entered by the user; and a search result presentation module configured to present the prefetched search result to the user in response to the prefetched search result hitting the query information.

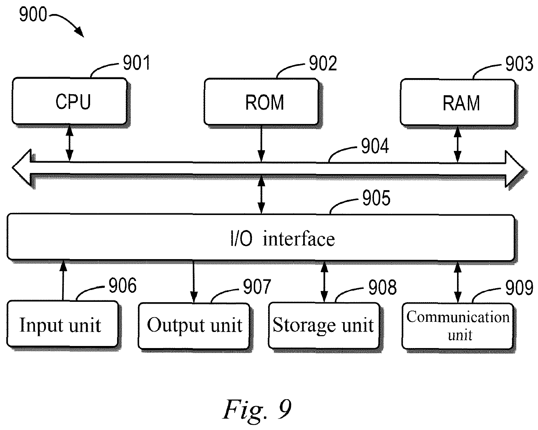

Fig. 9 is a block diagram of a computing device 900 that can implement a plurality of examples of the present disclosure. The device 900 may be used to implement the client 110 or the server system 120 in Fig. 1. As shown in the figure, the device 900 includes a central processing unit (CPU) 901, which may perform appropriate actions and processing according to computer program instructions stored in a read-only memory (ROM) 902 or computer program instructions loaded from a storage unit 908 to a random access memory (RAM) 903. The RAM 903 may further store various programs and data for the operation of the device 900. The CPU 901, the ROM 902, and the RAM 903 are connected to each other through a bus 904. An input/output (I/O) interface 905 is also connected to the bus 904.

A plurality of components in the device 900 are connected to the I/O interface 905, including: an input unit 906, such as a keyboard or a mouse; an output unit 907, such as various types of displays or speakers; a storage unit 908, such as a magnetic disk or an optical disc; and a communication unit 909, such as a network interface card, a modem, or a wireless communication transceiver. The communication unit 909 allows the device 900 to exchange information/data with other devices via a computer network such as the Internet and/or various telecommunications networks.

The processing unit 901 performs the various methods and processing described above, such as the processes 300 and 600. For example, in some examples, the processes 300 and 600 may be implemented as computer software programs, which are tangibly included in a machine-readable medium, such as the storage unit 908. In some examples, a part or all of the computer program may be loaded and/or installed onto the device 900 via the ROM 902 and/or the communication unit 909. When the computer program is loaded into the RAM 903 and executed by the CPU 901, one or more steps of the processes 300 and 600 described above may be performed. Alternatively, in other examples, the CPU 901 may be configured to perform the processes 300 and 600 in any other appropriate manner (for example, by means of firmware).

The functions described herein above may be performed at least partially by one or more hardware logic components. For example, without limitation, exemplary types of hardware logic components that can be used include: a field programmable gate array (FPGA), an application-specific integrated circuit (ASIC), an application-specific standard product (ASSP), a system-on-chip system (SOC), a complex programmable logic device (CPLD), etc.

Program code for implementing the method of the present disclosure can be written in any combination of one or more programming languages. The program code may be provided to a processor or controller of a general-purpose computer, a special-purpose computer, or other programmable data processing devices, such that when the program code is executed by the processor or controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include but is not limited to, an electronic, magnetic, optical, electromagnetic, infrared, or semiconductor system, apparatus, or device, or any combination thereof. More specific examples of the machine-readable medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In addition, although the various operations are depicted in a specific order, it should be understood as requiring such operations to be performed in the specific order shown or in a sequential order, or requiring all illustrated operations to be performed to achieve desired results. Under certain circumstances, multitasking and parallel processing may be advantageous. Likewise, although several specific implementation details are included in the above discussion, these should not be construed as limiting the scope of the present disclosure. Some features that are described in the context of separate examples can also be implemented in combination in a single implementation. Conversely, various features that are described in the context of a single implementation can also be implemented in a plurality of implementations individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A computer-implemented information search method, comprising:
receiving (302), from a client, a request message including query information;
determining (304), based on the request message, a suggested word result and a prefetched search result corresponding to the query information;
returning (306) the suggested word result as a first response message for the request message to the client; and
returning (308) the prefetched search result as a second response message for the request message to the client.

2. The method according to claim 1, wherein the determining the suggested word result and the prefetched search result based on the request message comprises:
generating, based on the request message, a suggested word request message and a prefetch service request message associated with the query information;
respectively sending the suggested word request message and the prefetch service request message to a suggested word service function entity and a prefetch service function entity in a server system; and
receiving a suggested word response message from the suggested word service function entity and a prefetch service response message from the prefetch service function entity,
wherein the suggested word response message comprises the suggested word result corresponding to the query information, and the prefetch service response message comprises the prefetched search result corresponding to the query information.

3. The method according to claim 1 or 2, wherein the request message comprises a suggested word request message, and the determining the suggested word result and the prefetched search result based on the request message comprises:
generating a suggested word response message based on the suggested word request message, wherein the suggested word response message comprises the suggested word result corresponding to the query information;
generating a prefetch service request message based on the suggested word request message; and
generating a prefetch service response message based on the prefetch service request message, wherein the prefetch service response message comprises the prefetched search result corresponding to the query information.

4. The method according to any one of claims 1 to 3, wherein the first response message and the second response message for the request message are transferred sequentially based on chunked transfer encoding of HyperText Transfer Protocol.

5. An information search method, comprising:
sending (602) a request message to a server system based on query information entered by a user, wherein the request message includes the query information; and
receiving (604), from at least one service function entity in the server system, a first response message and a second response message for the request message,
wherein the first response message indicates a suggested word result corresponding to the query information and to be presented to the user, and
wherein the second response message indicates a prefetched search result corresponding to the query information and to be presented to the user.

6. The method according to claim 5, wherein the at least one service function entity is configured to provide a suggested word service function or a prefetch service function.

7. The method according to claim 5 or 6, wherein the at least one service function entity is configured to provide a forwarding service function.

8. The method according to any one of claims 5 to 7, wherein the request message includes addressing information for addressing the at least one service function entity in the server system.

9. The method according to any one of claims 5 to 8, wherein the first response message and the second response message for the request message are transferred sequentially based on chunked transfer encoding of HyperText Transfer Protocol.

10. The method according to any one of claims 5 to 9, further comprising:
comparing the prefetched search result with the query information in response to receiving a search instruction entered by the user; and
presenting the prefetched search result to the user in response to the prefetched search result hitting the query information.

11. An information search apparatus, comprising:
a request message receiving module (702) configured to receive, from a client, a request message including query information;
a result determination module (704) configured to determine, based on the request message, a suggested word result and a prefetched search result corresponding to the query information;
a first response message sending module (706) configured to return the suggested word result as a first response message for the request message to the client; and
a second response message sending module (708) configured to return the prefetched search result as a second response message for the request message to the client.

12. The apparatus according to claim 11, wherein the result determination module is further configured to:
generate, based on the request message, a suggested word request message and a prefetch service request message associated with the query information;
respectively send the suggested word request message and the prefetch service request message to a suggested word service function entity and a prefetch service function entity in a server system; and
receive a suggested word response message from the suggested word service function entity and a prefetch service response message from the prefetch service function entity,
wherein the suggested word response message comprises the suggested word result corresponding to the query information, and the prefetch service response message comprises the prefetched search result corresponding to the query information.

13. An information search apparatus, comprising:
a request message sending module (802) configured to send a request message to a server system based on query information entered by a user, wherein the request message includes the query information; and
a response message receiving module (804) configured to receive, from at least one service function entity in the server system, a first response message and a second response message for the request message,
wherein the first response message indicates a suggested word result corresponding to the query information and to be presented to the user, and
wherein the second response message indicates a prefetched search result corresponding to the query information and to be presented to the user.

14. A computer program product comprising instructions, which, when the program is executed by a computer, causes the computer to carry out the method of any one of claims 1 to 10.

15. A computer-readable storage medium comprising instructions, which, when executed by a computer, cause the computer to carry out the method of any of claims 1 to 10.
